# EUROPÄISCHE PATENTANMELDUNG

(11) **EP 4 585 778 A1**
(43) Veröffentlichungstag der Anmeldung: **16.07.2025**
(21) Anmeldenummer: 24220405.5
(22) Anmeldetag: 17.12.2024
(51) Int. Cl.: E05B 55/06, E05B 55/12, E05C 1/12, E05B 1/00, E05B 47/06, E05B 47/00

(54) **SCHLOSS**

(30) Priorität: 12.01.2024 DE 102024100958
(71) Anmelder: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(57) **Zusammenfassung**

Die Erfindung betrifft ein Schloss mit einem Verriegelungsmechanismus, welcher einen Riegel aufweist, der zwischen einer zur Sicherung eines relativ zu dem Verriegelungsmechanismus bewegbaren Gegenstücks vorgesehenen Verriegelungsposition und einer zur Freigabe des Gegenstücks vorgesehenen Entriegelungsposition bewegbar ist, und mit einem Betätigungselement zur manuellen Bewegung des Riegels in die Entriegelungsposition.

## Beschreibung

Die Erfindung betrifft ein Schloss mit einem Verriegelungsmechanismus, welcher einen Riegel aufweist, der zwischen einer zur Sicherung eines relativ zu dem Verriegelungsmechanismus bewegbaren Gegenstücks vorgesehenen Verriegelungsposition und einer zur Freigabe des Gegenstücks vorgesehenen Entriegelungsposition bewegbar ist.

Derartige Schlösser sind grundsätzlich bekannt und kommen beispielsweise zum Einsatz, um einen Energiespeicher an einem Elektrofahrrad oder einem anderen Elektrofahrzeug zu sichern, oder um eine Transportbox oder ein Rahmenschloss des Elektrofahrzeugs zu verriegeln. Üblicherweise wird der Riegel des Schlosses durch ein vergleichsweise starkes Federelement in die Verriegelungsposition gedrängt, aus der er mittels eines Betätigungselements in eine Entriegelungsposition bewegt werden kann. Dabei besteht die Gefahr, dass starke Erschütterungen, z.B. bei Fahrt über holpriges Gelände oder bei Sprüngen, eine unbeabsichtigte Bewegung des Riegels gegen die Federkraft des Federelements in die Entriegelungsposition verursachen, wodurch beispielsweise ein durch das Schloss gesicherter Energiespeicher verloren gehen kann. Zudem besteht in ähnlicher Weise die Gefahr unberechtigter Zugriffe auf das Schloss, indem durch eine Einwirkung auf das Betätigungselement mit erhöhter Kraft eine starke Beschleunigung erzeugt und somit eine Bewegung des Riegels in die Entriegelungsposition erzwungen werden kann.

Der Erfindung liegt die Aufgabe zugrunde, ein Schloss der eingangs beschriebenen Art zu schaffen, das sich durch eine erhöhte Sicherheit und einen hohen Bedienkomfort auszeichnet.

Die Aufgabe wird durch ein Schloss mit den Merkmalen des Anspruchs 1 gelöst. So weist das erfindungsgemäße Schloss zusätzlich zu dem Verriegelungsmechanismus ein Betätigungselement zur manuellen Bewegung des Riegels in die Entriegelungsposition und einen an dem Riegel bewegbar, insbesondere verschiebbar, gelagerten Kopplungsbolzen auf, mit dem das Betätigungselement selektiv in Eingriff bringbar ist. Insbesondere kann das Betätigungselement im Eingriffszustand unmittelbar, d.h. ohne die Zwischenschaltung weiterer Bauteile, mit dem Kopplungsbolzen zusammenwirken.

Das bewegbare Gegenstück des Schlosses kann beispielsweise ein Energiespeicher oder Bestandteil eines Energiespeichers oder ein Kloben eines Rahmenschlosses oder Bremsscheibenschlosses oder ein Schließbügel oder eine Klinke eines Schlosses einer Transportbox jeweils eines Fahrzeugs oder Elektrofahrzeugs, insbesondere eines Elektrofahrrads, sein. Das Schloss kann auch bei einem anderen Fahrzeug oder Elektrofahrzeug, insbesondere einem elektrischen Rollstuhl, Elektroroller oder Elektrokart, ebenso wie bei einem mit Muskelkraft betriebenen Fahrzeug eingesetzt werden. Das erfindungsgemäße Schloss kann auch zur Verriegelung von Türen oder Fenstern, beispielsweise auch eines Caravans oder Wohnmobils, vorgesehen sein, ebenso zur Verriegelung von Schranktüren oder Schubladen oder von Transportkisten oder Containern. Grundsätzlich kann ein beliebiges mechanisches Schloss durch das erfindungsgemäße Schloss ersetzt werden.

Der Riegel kann in seiner Verriegelungsposition in eine Aussparung des Gegenstücks eingreifen oder dieses hintergreifen, um ein Entfernen des Gegenstücks aus dem Verriegelungsmechanismus zu verhindern. Umgekehrt kann der Riegel selbst eine Aussparung aufweisen, in die in der Verriegelungsposition eine entsprechende Struktur des Gegenstücks oder des Energiespeichers eingreifen kann. Ist das Schloss zur Sicherung eines Energiespeichers vorgesehen, so kann der Riegel in seiner Verriegelungsposition in eine Aussparung des Energiespeichers eingreifen oder einen Vorsprung des Energiespeichers derart hintergreifen, dass die Entnahme des Energiespeichers blockiert ist.

Das Betätigungselement kann eine Handhabe zur schlüssellosen Betätigung aufweisen, wodurch ein hoher Bedienkomfort erzielt wird. Die Handhabe kann einen Druckknopf, einen Schieber oder ein Zugelement zur Übertragung einer linearen, insbesondere drückenden oder ziehenden, Betätigungsbewegung auf das Koppelelement umfassen. Die Handhabe kann einen Drehknopf oder Drehgriff, welche durch eine rotatorische Betätigungsbewegung bedienbar sind, oder einen Hebel umfassen. Die Bewegung des Riegels durch das Betätigungselement kann insbesondere lediglich durch eine manuelle Betätigung durch einen Nutzer erfolgen, ohne dass eine elektromotorische Bewegung des Riegels vorgesehen ist. Grundsätzlich kann das Betätigungselement einen Schließzylinder und einen zugehörigen Schlüssel umfassen.

Vorteilhafte Ausführungsformen der Erfindung sind in den Unteransprüchen, der Beschreibung und der Zeichnung wiedergegeben.

Gemäß einer Ausführungsform ist die Bewegungsrichtung des Betätigungselements zumindest im Wesentlichen senkrecht zu einer Bewegungsrichtung des Riegels orientiert. Des Weiteren kann die Betätigung des Betätigungselements entgegen der Rückstellkraft einer Rückstellfeder erfolgen.

Gemäß einer weiteren Ausführungsform ist die Bewegungsrichtung des Kopplungsbolzens zumindest im Wesentlichen senkrecht zu einer Bewegungsrichtung des Riegels und/oder zumindest im Wesentlichen senkrecht zu einer Bewegungsrichtung des Betätigungselements orientiert.

Gemäß noch einer weiteren Ausführungsform weist der Riegel zumindest eine Aussparung zur Aufnahme des Kopplungsbolzens auf. Der Kopplungsbolzen kann in der zumindest einen Aussparung derart beweglich und insbesondere in Richtung einer Längsachse des Kopplungsbolzens verschiebbar gelagert sein, dass er aus dem Wirkbereich des Betätigungselements gebracht. Ferner kann der Kopplungsbolzen in der zumindest einen Aussparung derart gelagert sein, dass der Kopplungsbolzen den Riegel in die Entriegelungsposition mitnimmt, wenn er durch das Betätigungselement verlagert wird.

Gemäß noch einer weiteren Ausführungsform bilden das Betätigungselement, insbesondere eine schräge Steuerfläche des Betätigungselements, und der Kopplungsbolzen einen Rampenmechanismus zur Umsetzung einer Bewegung des Betätigungselements in eine Bewegung des Riegels.

Gemäß noch einer weiteren Ausführungsform ist ein Steuerelement zum Bewegen des Kopplungsbolzens vorgesehen, insbesondere zum wahlweisen Inkraftsetzen oder Außerkraftsetzen des Rampenmechanismus. Insbesondere kann die schräge Steuerfläche des Betätigungselements bei in Kraft gesetztem Rampenmechanismus und Betätigung des Betätigungselements auf den Kopplungsbolzen auflaufen und den Riegel dadurch in die Entriegelungsposition bewegen und bei außer Kraft gesetztem Rampenmechanismus und Betätigung des Betätigungselements ins Leere laufen, ohne den Riegel in die Entriegelungsposition zu bewegen.

Des Weiteren kann das Schloss zumindest einen Aktor, insbesondere einen elektromotorischen oder elektromagnetischen Aktor, zur Betätigung des Steuerelements umfassen. Das Steuerelement kann durch den Aktor rotatorisch und/oder translatorisch bewegt, insbesondere verdreht, verschwenkt oder verschoben werden, um dadurch eine Bewegung des Kopplungsbolzens zu bewirken.

Der Riegel kann entgegen einer Rückstellkraft einer Feder aus der Verriegelungsposition in die Entriegelungsposition bringbar sein. So ist sichergestellt, dass der Riegel grundsätzlich in seine Verriegelungsposition gedrängt wird. Die Gefahr einer versehentlichen Freigabe des Gegenstücks aus dem Verriegelungsmechanismus wird hierdurch verringert. Zudem kann durch die Feder eine Fallenfunktion realisiert werden, die ein automatisches Einrasten des Gegenstücks, beispielsweise eines Energiespeichers, in dem Verriegelungsmechanismus ermöglicht, wobei nach dem Einrasten der Riegel durch die Feder automatisch in die Verriegelungsposition bewegt wird.

Auch der Kopplungsbolzen kann entgegen der Rückstellkraft einer Feder bewegbar sein, insbesondere aus einer Position, in welcher er mit dem Betätigungselement in Eingriff bringbar ist, in eine Position, in welcher er nicht mit dem Betätigungselement in Eingriff bringbar ist, oder umgekehrt.

Gemäß einer weiteren Ausführungsform weist das Schloss ein Sperrelement auf, das zwischen einer Sperrstellung, in welcher der Riegel in seiner Verriegelungsposition gesperrt ist, und einer Freigabestellung verstellbar ist, in welcher der Riegel in seine Entriegelungsposition bewegbar ist. Das Sperrelement kann beispielsweise als Stift oder Zapfen ausgebildet sein. Das Sperrelement kann zur Sperrung des Riegels grundsätzlich mit einem beliebigen beweglichen Element des Schlosses zusammenwirken, bevorzugt jedoch mit dem Riegel selbst.

In der Sperrstellung sichert der Verriegelungsmechanismus mittels des Riegels also unmittelbar das Gegenstück in dem Schloss, und zudem blockiert das Sperrelement den Verriegelungsmechanismus, sodass eine Betätigung desselben erst nach Verstellen des Sperrelements in die Freigabestellung möglich ist. Um das Schloss zu entriegeln sind daher insgesamt zwei Freigabeschritte erforderlich. Ein versehentliches Bewegen des Riegels in die Entriegelungsposition, beispielsweise bei einer Fahrt über unebenes Gelände oder durch gewaltsame Einwirkung auf das Schloss, werden durch das Sperrelement in der Sperrstellung besonders wirksam verhindert, sodass die Sicherheit des Schlosses erhöht wird.

Ein Verstellen des Sperrelements zwischen der Sperrstellung und der Freigabestellung kann eine Rotations- und/oder Translationsbewegung des Sperrelements umfassen. Beispielsweise kann das Verstellen des Sperrelements ein Verschwenken, Verdrehen, Verschieben des Sperrelements oder eine Kombination davon umfassen, insbesondere eine Linearbewegung entlang einer Längsachse des Sperrelements.

Gemäß einer Ausführungsform ist das Sperrelement an dem Steuerelement ausgebildet. Alternativ oder zusätzlich kann das Sperrelement durch den Kopplungsbolzen selbst gebildet sein.

Gemäß einer Ausführungsform steht das Sperrelement in seiner Sperrstellung mit einer Komponente des Schlosses in Eingriff, insbesondere mit einer nicht beweglichen Komponente, wie beispielsweise einem Gehäuse, des Schlosses. Die Komponente des Schlosses kann dazu ausgebildet sein, eine Bewegung des Sperrelements entlang der Bewegungsrichtung des Riegels zu verhindern. Grundsätzlich kann zur Sicherung des Sperrelements in seiner Sperrstellung eine bewegliche Komponente des Schlosses vorgesehen sein. An der beweglichen oder nicht beweglichen Komponente des Schlosses, insbesondere an dem Gehäuse des Schlosses, kann eine entsprechende Aufnahme für das Sperrelement vorgesehen sein, welche eine Bewegung des Sperrelements, insbesondere in Bewegungsrichtung des Riegels, blockiert.

Gemäß einer Ausführungsform weist das Schloss zumindest einen Aktor zur Verstellung des Sperrelements zwischen seiner Sperrstellung und seiner Freigabestellung auf. Bei dem Aktor kann es sich um einen elektromotorischen oder elektromagnetischen Aktor handeln. Insbesondere handelt es sich hierbei um den zur Betätigung des Steuerelements vorgesehenen Aktor. Eine manuelle Überführung des Sperrelements in eine Sperrstellung oder Freigabestellung durch einen Nutzer des Schlosses ist somit entbehrlich, wodurch sich der Bedienkomfort erhöht. Da durch den Aktor lediglich das Sperrelement betätigt wird, nicht aber der Riegel, kann ein Aktor mit geringerer Leistung und/oder kompakteren Abmessungen verwendet werden.

Es kann vorgesehen sein, dass das Schloss eine Empfangseinheit zum Empfangen eines drahtgebunden oder drahtlos, insbesondere durch ein Mobiltelefon, übermittelten Freigabesignals aufweist, wobei das Freigabesignal die Anweisung zur Verstellung des Sperrelements in die Freigabestellung oder Sperrstellung enthalten kann. Eine schlüssellose Betätigung des Schlosses kann umfassen, dass nach einer elektrischen Verstellung des Sperrelements in die Freigabestellung eine manuelle Bewegung des Riegels mittels des Betätigungselements in die Entriegelungsposition erfolgen kann.

Um den Benutzer auf eine fehlerhafte, insbesondere nicht vollständige, Verriegelung des Schlosses aufmerksam zu machen, kann das Schloss ferner ein Detektionsmittel zur Detektion der Einnahme der Verriegelungsposition durch den Riegel umfassen. Durch das Detektionsmittel lässt sich überwachen, ob der Riegel bei einem Verriegelungsvorgang tatsächlich seine Verriegelungsposition erreicht oder ob er beispielsweise durch einen nicht korrekt eingesetzten Energiespeicher daran gehindert wird. Im letzteren Fall lässt sich eine geeignete Warnung an den Benutzer ausgeben, beispielsweise in Form einer an einem Bordcomputer eines Elektrofahrrads, an einem Mobiltelefon des Benutzers und/oder an dem Schloss selbst erzeugten optischen und/oder akustischen Rückmeldung.

Das Detektionsmittel kann beispielsweise einen Aktor, insbesondere einen elektromotorischen oder elektromagnetischen Aktor, zur Verstellung eines Sperrelements umfassen, das zwischen einer Sperrstellung, in welcher der Riegel in seiner Verriegelungsposition gesperrt ist, und einer Freigabestellung verstellbar ist, in welcher der Riegel in seine Entriegelungsposition bewegbar ist. Insbesondere kann es sich bei dem Aktor um denselben Aktor handeln, welcher auch zur Bewegung des Steuerelements vorgesehen ist.

Nachfolgend wird die Erfindung rein beispielhaft anhand möglicher Ausführungsformen unter Bezugnahme auf die beigefügte Zeichnung beschrieben. Es zeigen:
- Fig. 1A: eine perspektivische Ansicht einer ersten Ausführungsform eines erfindungsgemäßen Schlosses mit einem außer Kraft gesetzten Rampenmechanismus;
- Fig. 1B: das Schloss von Fig. 1A mit teilweise aufgebrochenem Riegel;
- Fig. 2A: eine perspektivische Ansicht des Schlosses von Fig. 1A mit in Kraft gesetztem Rampenmechanismus;
- Fig. 2B: die Ansicht von Fig. 2A mit teilweise aufgebrochenem Riegel;
- Fig. 3A: eine perspektivische Ansicht des Schlosses von Fig. 1A mit in Kraft gesetztem Rampenmechanismus und betätigtem Betätigungselement;
- Fig. 3B: die Ansicht von Fig. 3A mit teilweise aufgebrochenem Riegel;
- Fig. 4A: eine perspektivische Ansicht einer zweiten Ausführungsform eines erfindungsgemäßen Schlosses mit einem außer Kraft gesetzten Rampenmechanismus;
- Fig. 4B: das Schloss von Fig. 4A mit teilweise aufgebrochenem Riegel;
- Fig. 5A: eine perspektivische Ansicht des Schlosses von Fig. 4A mit in Kraft gesetztem Rampenmechanismus;
- Fig. 5B: die Ansicht von Fig. 5A mit teilweise aufgebrochenem Riegel;
- Fig. 6A: eine perspektivische Ansicht des Schlosses von Fig. 4A mit in Kraft gesetztem Rampenmechanismus und betätigtem Betätigungselement;
- Fig. 6B: die Ansicht von Fig. 6A mit teilweise aufgebrochenem Riegel.

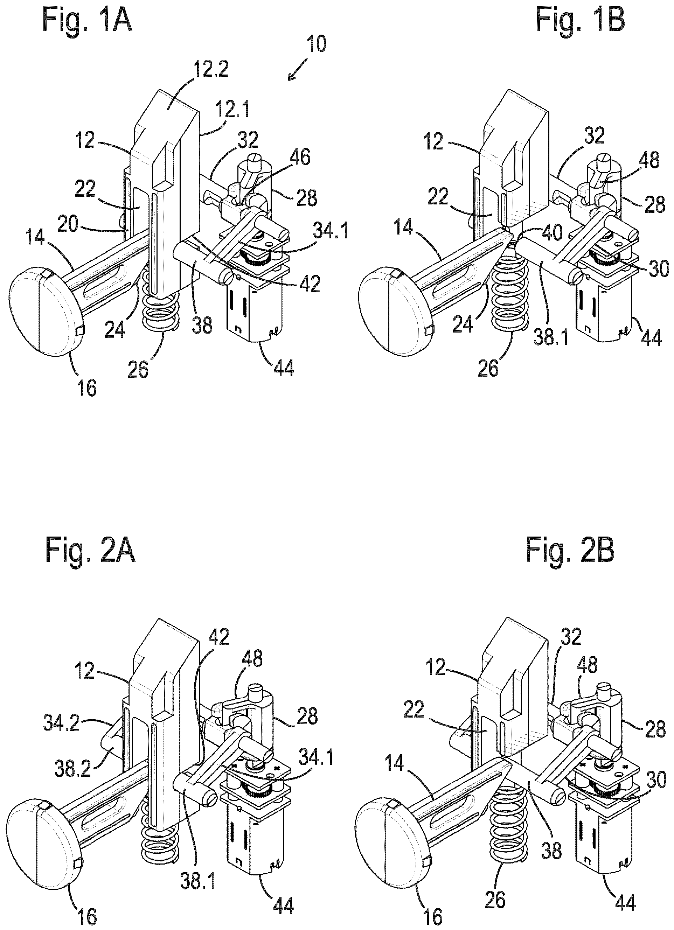

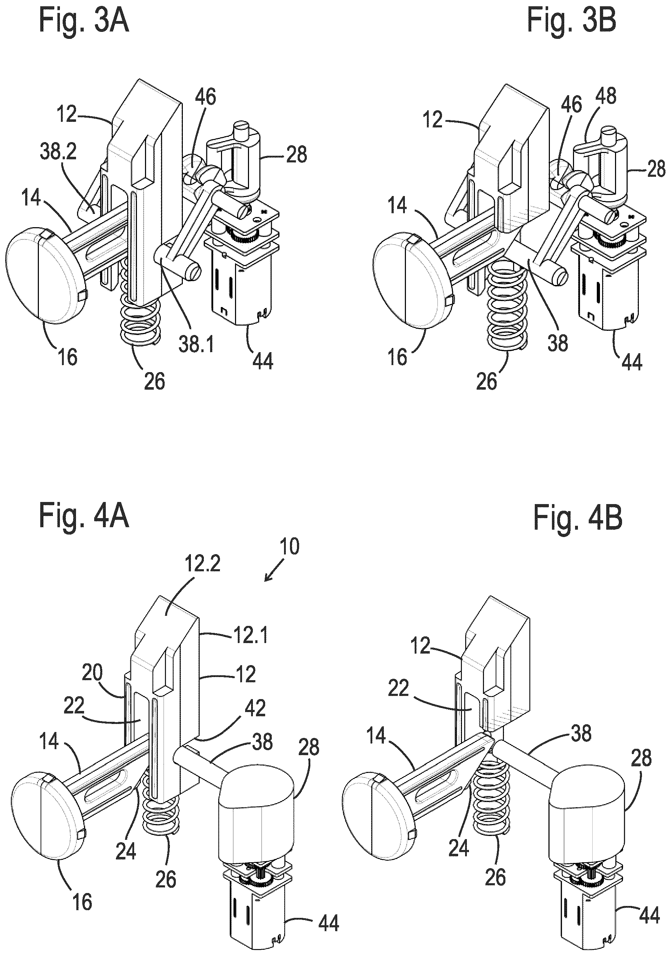

In Fig. 1A bis 3B ist eine erste Ausführungsform eines Schlosses 10, insbesondere für ein Elektrofahrrad und beispielsweise zum Sichern eines Energiespeichers an dem Elektrofahrrad, dargestellt. Grundsätzlich kann das Schloss 10 jedoch auch zur Verriegelung von Türen, Fenstern, Schubladen, Transportkisten, Containern oder allgemein als Ersatz für ein mechanisches Schloss eingesetzt werden. Das Schloss 10 umfasst einen Verriegelungsmechanismus mit einem Riegel 12, welcher einen Verriegelungsabschnitt 12.1 aufweist. Der Riegel 12 ist zwischen einer in Fig. 1A und 1B dargestellten Verriegelungsposition und einer in Fig. 3A und 3B dargestellten Entriegelungsposition bewegbar. In der Verriegelungsposition kann der Verriegelungsabschnitt 12.1 des Riegels 12 mit einem relativ zu dem Verriegelungsmechanismus bewegbaren Gegenstück, beispielsweise den Energiespeicher (nicht gezeigt), in Eingriff gebracht werden, um diesen zu sichern, wobei die Entriegelungsposition die Freigabe des Gegenstücks vorgesehen ist.

Der Riegel 12 ist mittels einer Feder 26 gelagert, sodass er entgegen der Rückstellkraft der Feder 26 aus seiner Verriegelungsposition in die Entriegelungsposition bringbar ist. Durch die Lagerung des Riegels 12 mittels der Feder 26 kann eine Fallenfunktion des Schlosses 10 realisiert werden. Das Einsetzen eines Gegenstücks, beispielsweise des Energiespeichers, in das Schloss 10 kann bei in dem Verriegelungszustand befindlichem Riegel 12 erfolgen, da der Riegel 12 beim Einsetzen des Gegenstücks gegen die Rückstellkraft der Feder 26 zwischenzeitlich in seine Entriegelungsposition gedrückt wird. Dazu ist eine Steuerschräge 12.2 an dem Riegel vorgesehen. Ist das Gegenstück vollständig in das Schloss 10 eingesetzt, wird der Riegel 12 durch die Feder 26 automatisch in seine Verriegelungsposition gedrängt, sodass sofort ein Verlierschutz für das Gegenstück besteht.

Zur Bewegung des Riegels von der Verriegelungsposition in die Entriegelungsposition umfasst das Schloss 10 ein manuell betätigbares Betätigungselement 14, das in der gezeigten Ausführungsform eine Handhabe 16 in Form eines Druccknopfes umfasst. Bei einer Betätigung des Druckknopfes wird das Betätigungselement 14 entlang einer Betätigungsachse und entgegen der Rückstellkraft einer nicht dargestellten Rückstellfeder in Richtung des Riegels 12 verschoben.

Das Betätigungselement 14 ist in einem Führungsabschnitt 20 des Riegels 12 geführt. Im vorliegenden Ausführungsbeispiel bildet der Führungsabschnitt 20 hierzu einen zentral innerhalb des Riegels 12 gelegenen Führungsschacht 22 aus, welcher insbesondere an drei Seiten, in den Figuren nämlich seitlich und oben, durch den Führungsabschnitt 20 begrenzt ist. Alternativ ist aber auch eine Führung für das Betätigungselement 14 vorstellbar, welche dezentral im oder am Riegel 12 angeordnet ist, z.B. an einer Außenseite des Riegels 12. Beispielsweise kann der Führungsabschnitt 20 eine seitlich offene Führung für das Betätigungselement 14 definieren, die insbesondere nur auf einer Seite sowie oben und gegebenenfalls unten durch den Führungsabschnitt 20 begrenzt wird.

Die Längsachse des Riegels 12 und somit dessen Bewegungsrichtung ist senkrecht zu der Bewegungsrichtung des Betätigungselements 14 entlang der Betätigungsachse orientiert.

Um die Betätigungsbewegung des Betätigungselements 14 in die dazu senkrechte Riegelbewegung umzuwandeln, ist ein Rampenmechanismus vorgesehen, welcher zum einen durch eine schräge Steuerfläche 24 des Betätigungselements 14 und zum anderen durch einen Kopplungsbolzen 38 eines Steuerelements 28 gebildet ist. Durch das Steuerelement 28 ist der Rampenmechanismus wahlweise in Kraft oder außer Kraft setzbar. Ist der Rampenmechanismus in Kraft gesetzt, so kann die schräge Steuerfläche 24 bei einer Betätigung des Betätigungselements 14 auf den Kopplungsbolzen 38 auflaufen und so den Riegel 12 in die Entriegelungsposition drücken. Ist der Rampenmechanismus hingegen außer Kraft gesetzt, so ist der Kopplungsbolzen 38 derart verlagert, dass die schräge Steuerfläche 24 bei einer Betätigung des Betätigungselements 14 durch eine Unterbrechung 40 des Kopplungsbolzens 38 hindurchtaucht und die Bewegung des Betätigungselements 14 gewissermaßen ins Leere läuft, ohne den Riegel 12 zu bewegen.

Gemäß Fig. 1A und 1B befindet sich der Kopplungsbolzen 38 in einem Entkopplungszustand, in welchem seine Unterbrechung 40 mit dem Betätigungselement 14 ausgerichtet ist, sodass eine Bewegung des Betätigungselements 14 ohne Effekt auf den Riegel 12 bleibt. Um mittels des Betätigungselements 14 den Riegel 12 in seine Entriegelungsposition bewegen zu können, kann der Kopplungsbolzen 38 durch das Steuerelement 28 in einen Kopplungszustand verlagert werden (Fig. 2A und 2B), so dass die schräge Steuerfläche 24 bei einer Betätigung des Betätigungselements 14 auf den Kopplungsbolzen 38 aufläuft und so den Riegel 12 in die Entriegelungsposition drückt (Fig. 3A und 3B).

In dem gezeigten Ausführungsbeispiel ist das Steuerelement 28 als Steuergabel 30 ausgebildet, welche neben einer Aufhängungsstrebe 32 einen ersten Zinken 34.1 und einen zweiten Zinken 34.2 umfasst und den Riegel 12 somit an drei Seiten umgreift.

Der Kopplungsbolzen 38 erstreckt sich zwischen dem ersten und zweiten Zinken 34.1, 34.2, so dass dessen Längsachse senkrecht zu den Zinken 34.1, 34.2 und zu der Bewegungsrichtung des Riegels 12 orientiert ist. Der Kopplungsbolzen 38 ist an einem der Aufhängungsstrebe 32 gegenüberliegenden Ende der Steuergabel 30 angeordnet und trifft bezüglich der Betätigungsachse des Betätigungselements 14 im Wesentlichen mittig auf den Riegel 12.

Um den Kopplungsbolzen 38 aufnehmen zu können, weist der Riegel 12 zwei Durchtrittsöffnungen 42 auf, welche in Bezug auf die Längsachse des Kopplungsbolzens 38 an gegenüberliegenden Seiten des Riegels 12 angeordnet sind.

Der Kopplungsbolzen 38 ist zweiteilig ausgebildet und umfasst einen ersten Kopplungsbolzenabschnitt 38.1 und einen zweiten Kopplungsbolzenabschnitt 38.2, welche durch die Unterbrechung 40 getrennt sind. Die Weite der Unterbrechung 40 ist an die Breite des Betätigungselements 14 derart anpasst, dass das Betätigungselement 14 in die Unterbrechung 40 eintauchen kann, ohne mit dem Kopplungsbolzen 38 in Eingriff zu gelangen. Dies charakterisiert gerade den Entkopplungszustand gemäß Fig. 1A und 1B.

Um den Kopplungsbolzen 38 ausgehend von dem in Fig. 1A und 1B gezeigten Entkopplungszustand in den Kopplungszustand - und gegebenenfalls umgekehrt - zu überführen, weist das Schloss 10 einen Elektromotor 44 auf, der mit dem Steuerelement 28 über die Aufhängungsstrebe 32 verbunden ist. Die Aufhängungsstrebe 32 weist eine Gelenkrinne 46 auf, welche im gezeigten Ausführungsbeispiel mit einem auf einer Welle des Elektromotors 44 sitzenden Schwenkarm 48 gelenkig verbunden ist, wobei der Schwenkarm 48 in wohldefinierte Stellungen verschwenkt werden kann. Eine in Fig. 1A und 1B gezeigte erste Stellung des Schwenkarms 48 entspricht dem Entkopplungszustand und eine in Fig. 2A und 2B gezeigte zweite Stellung des Schwenkarms 48 dem Kopplungszustand des Kopplungsbolzens 38.

Ein Verschwenken des Schwenkarms 48 von der ersten Stellung gemäß Fig. 1A und 1B in die zweite Stellung gemäß Fig. 2A und 2B führt zu einer Linearverschiebung des Steuerelements 28 entlang der Längsachse des Kopplungsbolzens 38. Durch die Linearverschiebung wird die Unterbrechung 40 des Kopplungsbolzens 38 relativ zum Betätigungselement 14 verschoben, so dass die schräge Steuerfläche 24 des Betätigungselement 14 auf den Kopplungsbolzens 38 auflaufen kann. Der Kopplungsbolzen 38 wird somit in seinen Kopplungszustand gebracht (Fig. 15).

Der Riegel 12 ist über den Kopplungsbolzen 38 beweglich mit dem Steuerelement 28 verbunden. Insbesondere ist eine relative Rotation des Steuerelements 28 um die Längsachse des Kopplungsbolzens 38, sowie eine relative Translation in Richtung der Längsachse des Kopplungsbolzens 38 möglich.

In Fig. 4A bis 6B ist eine zweite Ausführungsform eines Schlosses 10 dargestellt, welche sich von der voranstehend beschriebenen ersten Ausführungsform lediglich darin unterscheidet, dass es sich bei dem Kopplungsbolzen 38 hier um einen durchgehenden Bolzen handelt, welcher zum Außerkraftsetzen des Rampenmechanismus aus dem Riegel 12, genauer gesagt aus der Führung des Riegels 12 für das Betätigungselement 14, hier aus dem Führungsschacht 22, soweit herausbewegt werden kann, dass sich das Betätigungselement 14 im Falle seiner Betätigung an dem Kopplungsbolzen 38 vorbeibewegen kann, ohne dass die schräge Steuerfläche des Betätigungselements 14 auf den Kopplungsbolzen 38 aufläuft und den Riegel 12 dadurch in seine Entriegelungsposition versetzt (Fig. 4A und 4B).

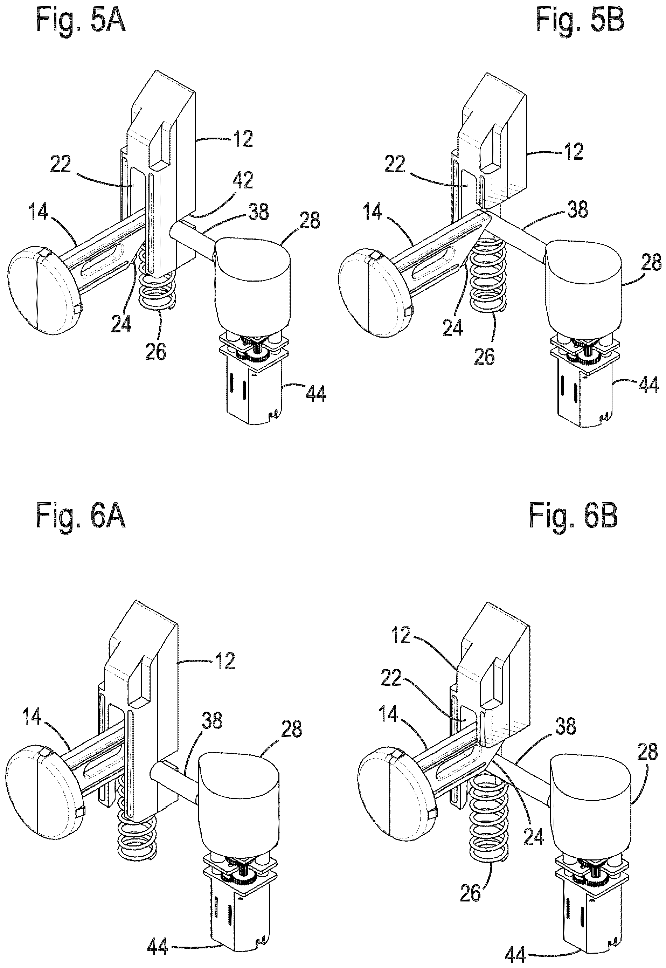

Die Verlagerung des Kopplungsbolzens 38 aus dem Führungsschacht 22 erfolgt dabei durch die Rückstellkraft einer nicht dargestellten Feder, welche den Kopplungsbolzen 38 gegen ein bei dieser Ausführungsform nockenartig ausgebildetes Steuerelement 28 drückt. Durch einen Elektromotor 44 lässt sich das nockenartige Steuerelement 28 so verdrehen, dass der Kopplungsbolzen 38 entgegen der Rückstellkraft der nicht dargestellten Feder wieder in den Führungsschacht 22 des Riegels 12 hineingeschoben wird (Fig. 5A und 5B), so dass die schräge Steuerfläche 24 des Betätigungselements 14 bei einer Betätigung des Betätigungselements 14 nun auf den Kopplungsbolzen 38 auflaufen und den Riegel 12 dadurch in seine Entriegelungsposition bewegen kann (Fig. 6A und 6B).

Bei der in Fig. 4A bis 6B gezeigten zweiten Ausführungsform weist der Kopplungsbolzen 38 einen runden, insbesondere einen kreisrunden Querschnitt auf. Es versteht sich, dass der Kopplungsbolzen 38 grundsätzlich aber auch einen unrunden Querschnitt aufweisen kann. Insbesondere ist ein Kopplungsbolzen 38 mit einer ebenen Steuerfläche denkbar, wobei die Lage bzw. Neigung dieser ebenen Steuerfläche insbesondere an die schräge Steuerfläche 24 des Betätigungselements 14 angepasst ist, so dass das Betätigungselement 14 auf einer maximalen Fläche mit dem Kopplungsbolzen 38 in Kontakt gerät. Beispielsweise könnte der Querschnitt des Kopplungsbolzens 38 hierfür halbkreisförmig oder viereckig, insbesondere quadratisch ausgebildet sein.

### Bezugszeichenliste

- 10: Schloss
- 12: Riegel
- 12.1: Verriegelungsabschnitt
- 12.2: Steuerschräge
- 14: Betätigungselement
- 16: Handhabe
- 20: Führungsabschnitt
- 22: Führungsschacht
- 24: schräge Steuerfläche
- 26: Feder
- 28: Steuerelement
- 30: Steuergabel
- 32: Aufhängungsstrebe
- 34.1: erster Zinken
- 34.2: zweiter Zinken
- 38: Kopplungsbolzen
- 38.1: erster Kopplungsbolzenabschnitt
- 38.2: zweiter Kopplungsbolzenabschnitt
- 40: Unterbrechung des Kopplungsbolzens
- 42: Durchtrittsöffnung des Riegels
- 44: Elektromotor
- 46: Gelenkrinne
- 48: Schwenkarm

## Patentansprüche

1. Schloss (10) mit
einem Verriegelungsmechanismus, welcher einen Riegel (12) aufweist, der zwischen einer zur Sicherung eines relativ zu dem Verriegelungsmechanismus bewegbaren Gegenstücks vorgesehenen Verriegelungsposition und einer zur Freigabe des Gegenstücks vorgesehenen Entriegelungsposition bewegbar ist,
einem Betätigungselement (14) zur manuellen Bewegung des Riegels (12) in die Entriegelungsposition und
einem an dem Riegel (12) bewegbar gelagerten Kopplungsbolzen (38), mit dem das Betätigungselement (14) selektiv in Eingriff bringbar ist.

2. Schloss (10) nach Anspruch 1,
**dadurch gekennzeichnet, dass** die Bewegungsrichtung des Betätigungselements (14) zumindest im Wesentlichen senkrecht zu einer Bewegungsrichtung des Riegels (12) orientiert ist.

3. Schloss (10) nach Anspruch 1,
**dadurch gekennzeichnet, dass** die Bewegungsrichtung des Kopplungsbolzens (38) zumindest im Wesentlichen senkrecht zu einer Bewegungsrichtung des Riegels (12) und/oder zumindest im Wesentlichen senkrecht zu einer Bewegungsrichtung des Betätigungselements (14) orientiert ist.

4. Schloss (10) nach zumindest einem der vorstehenden Ansprüche,
**dadurch gekennzeichnet, dass** der Riegel (12) zumindest eine Aussparung (42) zur Aufnahme des Kopplungsbolzens (38) aufweist.

5. Schloss (10) nach zumindest einem der vorstehenden Ansprüche,
**dadurch gekennzeichnet, dass** das Betätigungselement (14), insbesondere eine schräge Steuerfläche (24) des Betätigungselements (14), und der Kopplungsbolzen (38) einen Rampenmechanismus zur Umsetzung einer Bewegung des Betätigungselements (14) in eine Bewegung des Riegels (12) bilden.

6. Schloss (10) nach zumindest einem der vorstehenden Ansprüche,
**gekennzeichnet durch** ein Steuerelement (28) zum Bewegen des Kopplungsbolzens (38), insbesondere zum wahlweisen Inkraftsetzen oder Au-ßerkraftsetzen eines das Betätigungselement (14) und den Kopplungsbolzen (38) umfassenden Rampenmechanismus.

7. Schloss (10) nach Anspruch 6,
**gekennzeichnet durch** zumindest einen Aktor (44) zur Betätigung des Steuerelements (28).

8. Schloss (10) nach zumindest einem der vorstehenden Ansprüche,
**dadurch gekennzeichnet, dass** der Riegel (12) entgegen einer Rückstellkraft einer Feder (26) aus der Verriegelungsposition in die Entriegelungsposition bringbar ist.

9. Schloss (10) nach zumindest einem der vorstehenden Ansprüche,
**gekennzeichnet durch** ein Sperrelement, das zwischen einer Sperrstellung, in welcher der Riegel (12) in seiner Verriegelungsposition gesperrt ist, und einer Freigabestellung verstellbar ist, in welcher der Riegel (12) in seine Entriegelungsposition bewegbar ist.

10. Schloss (10) nach Anspruch 9,
**dadurch gekennzeichnet, dass** das Sperrelement an dem Steuerelement (28) ausgebildet oder durch den Kopplungsbolzen (38) gebildet ist.

11. Schloss (10) nach Anspruch 9 oder 10,
**dadurch gekennzeichnet, dass** das Sperrelement in seiner Sperrstellung mit einer Komponente des Schlosses (10) in Eingriff steht, insbesondere mit einer nicht beweglichen Komponente, wie beispielsweise einem Gehäuse, des Schlosses (10).

12. Schloss (10) nach zumindest einem der vorstehenden Ansprüche,
**gekennzeichnet durch** ein Detektionsmittel zur Detektion der Einnahme der Verriegelungsposition durch den Riegel (12).

13. Schloss (10) nach zumindest Anspruch 12,
**dadurch gekennzeichnet, dass** das Detektionsmittel einen Aktor (44) zur Verstellung eines Sperrelements umfasst, das zwischen einer Sperrstellung, in welcher der Riegel (12) in seiner Verriegelungsposition gesperrt ist, und einer Freigabestellung verstellbar ist, in welcher der Riegel (12) in seine Entriegelungsposition bewegbar ist.
